# EUROPEAN PATENT APPLICATION

(11) **EP 2 624 535 A1**
(43) Date of publication of application: **07.08.2013**
(21) Application number: 12305118.7
(22) Date of filing: 31.01.2012
(51) Int. Cl.: H04M 3/56

(54) **Audio conferencing with spatial sound**

(71) Applicant: Alcatel Lucent, 75007 Paris (FR)
(72) Inventor: Abou-Chakra, Rabih, 92707 COLOMBES (FR); Moulehiawy, Abdelkrim, 92707 COLOMBES (FR)
(74) Representative: den Braber, Gerard Paul

(57) **Abstract**

In an audio conferencing system (ACS), an attribute data collection module (ADC) collects respective attribute data for respective participants. An attribute data for a participant indicates a category to which the participant belongs. Respective participants who belong to a same category have similar attribute data. A spatial audio control module (SAC) assigns respective sets of participants having similar attribute data to respective locations in a spatial image of an audio output (O1-O5) for a participant of the audio conference. A set of participants having similar attribute data are assigned to a same location in the spatial image. A spatial audio generating module (SAG) generates audio outputs for the participants of the audio conference by placing respective audio inputs of respective sets of participants at respective locations that have been assigned by the spatial audio control module

## Description

### FIELD OF THE INVENTION

An aspect of the invention relates to an audio conferencing system. The system may be used, for example, in a communication network to which audio conference participants are connected, either directly or indirectly. Other aspects of the invention relate to a method of processing for audio conferencing, and a device readable medium comprising a set of instructions.

### BACKGROUND OF THE INVENTION

An audio conferencing typically involves a system that receives respective audio inputs from respective participants of an audio conference. The system may receive these audio inputs through a telecommunication network. The system generates an audio output that is a combination of the respective audio inputs from the respective participants of the audio conference. The system transmits this audio output to the respective participants of the audio conference. This transmission can also take place through the telecommunication network.

In an audio conference, a participant may have difficulty in recognizing who is speaking at a given instant. Such difficulty may occur because, for example, the participant is not familiar with voice characteristics of one or more other participants of the audio conference. Two or more participants may have never spoken to each other before. For example, a participant may be an invited technical expert to a profound commercial discussion. In addition, audio quality may be relatively poor due to, for example, speech coding with a relatively high compression rate providing relatively low quality, background noise, inappropriate microphone settings, and transmission losses and noise. A participant may devote a major part of his or her attention to trying to recognize who is speaking. This may prevent a participant from efficiently participating to the audio conference, or may at least reduce his or her efficiency, and even lead to misunderstanding and confusion about different positions that expressed (who said what?).

The aforementioned difficulty in recognizing who is speaking can be alleviated if audio is spatial. An audio conferencing system may generate an audio output in which respective voices appear as coming from respective different directions. The audio output has a spatial image and each participant is placed at a unique location in the spatial image. For example, let it be assumed that an audio conference has three participants: John, Susanne, and Peter. The audio output may be in stereo, where John has a left-most location in the stereo image, Susanna has a center location, and Peter has a right-most location.

### SUMMARY OF THE INVENTION

There is a need for a solution that allows efficient audio conferencing with spatial sound, even if there are relatively many participants.

In order to better address this need, the following points have been taken into consideration. A spatial distribution based on making a distinction between individual participants, as described hereinbefore, may not significantly improve efficiency in audio conferencing. This is particularly true in case there are relatively many participants to an audio conference. In that case, the spatial distribution will be relatively crowded: there are relatively many different locations from which voices appear to come. A participant may have difficulty in audibly distinguishing between these different locations. The participant may not recognize with sufficient precision where a voice is coming from.

In accordance with an aspect of the invention, an audio conferencing system comprises:
- an attribute data collection module arranged to collect respective attribute data for respective participants of an audio conference, an attribute data for a participant indicating a category to which the participant belongs, whereby respective participants who belong to a same category have similar attribute data; and
- a spatial audio control module arranged to assign respective sets of participants having similar attribute data to respective locations in a spatial image of an audio output for a participant of the audio conference, whereby a set of participants having similar attribute data are assigned to a same location in the spatial image;
- a spatial audio generating module arranged to generate audio outputs for the participants of the audio conference by placing respective audio inputs of respective sets of participants at respective locations that have been assigned by the spatial audio control module.

Another aspect of the invention concerns method of processing for audio conferencing, the method comprising:
- an attribute data collection step in which respective attribute data for respective participants of an audio conference are collected, an attribute data for a participant indicating a category to which the participant belongs, whereby respective participants who belong to a same category have similar attribute data;
- a spatial audio control step in which respective sets of participants having similar attribute data are assigned to respective locations in a spatial image of an audio output for a participant of the audio conference, whereby a set of participants having similar attribute data are assigned to a same location in the spatial image; and
- a spatial audio generating step in which audio outputs for the participants of the audio conference are generated by placing respective audio inputs of respective sets of participants at respective locations that have been assigned in the spatial audio control step.

Yet another aspect of the invention concerns a device readable medium comprising a set of instructions that enables a device, which is capable of executing the set of instructions, to carry out the method according as defined hereinbefore.

A spatial distribution of participants is thus based on making a distinction between different categories of participants, rather than making a distinction between individual participants. Participants who have been classified as belonging to a same category are placed at a similar location in the spatial image. That is, these participants are clustered. Respective clusters of participants are formed, as it were, whereby a particular cluster of participants has a particular location in the spatial image of an audio output. For example, participants who belong to a marketing department are clustered and placed at a left-most location in the spatial image, participants who belong to a manufacturing department are placed at a center location, and participants who belong to a procurement department are placed at a right-most location.

Since the spatial distribution is based on making a distinction between different categories of participants, rather than making a distinction between individual participants, there will be fewer different locations in the spatial image from which sound appears to come. A less crowded spatial distribution is obtained, which allows a participant to better recognize where a voice is coming from. Moreover, in an audio conference a primary distinction of interest generally concerns a capacity in which a participant speaks. Is it someone from the marketing department who speaks, someone from the manufacturing department, or someone from the procurement department? Embodiments of the invention allow a participant to make this primary distinction of interest in an efficient manner.

What is more, a participant may relatively easily recognize who exactly is speaking. This is because the participant can easily recognize the category to which a speaker belongs from the direction from which his or her voice appears to come. The participant then merely has to make a distinction between the different voices coming from that direction.

An embodiment of the invention advantageously comprises one or more of the following additional features, which are described in separate paragraphs. These additional features each contribute to efficient audio conferencing.

The attribute data collection module advantageously collects attribute data from a database comprising data relating to respective participants.

The attribute data collection module advantageously queries the database on the basis of an identifier of a participant.

The attribute data collection module may advantageously query the database on the basis of a telephone number of a participant.

The attribute data collection module may advantageously query the database on the basis of a name of a participant.

The attribute data collection module may advantageously transmit a query to a terminal of a participant, the query inviting the participant to specify attribute data.

The spatial audio control module can advantageously interact with a terminal of a participant so as to define respective locations of respective participants in the spatial image of an audio output.

The spatial audio control module can advantageously modify respective locations of respective participants in the spatial image of an audio output during the audio conference in at least one of the following two cases:
- a first case in which a participant joins the audio conference, whereby there is no attribute data for this participant that corresponds with the attribute data of any participant who has already joined the audio conference, and
- a second case in which a participant leaves the audio conference, whereby there is no attribute data for this participant that corresponds with the attribute data of any participant who remains in the audio conference.

The audio conferencing system advantageously comprises a conference control module that can identify an audio input as belonging to a particular participant on the basis of at least one of the following data: a data extracted from the audio input, a data provided by the participant in association with the audio input, and an identifier associated with the audio input.

The attribute data collection module may advantageously collect respective sets of attribute data for respective participants. The spatial audio control module may then advantageously select a particular type of attribute data from the respective sets for assigning the respective participants to the respective locations in the spatial image of an audio output.

The spatial audio control module may advantageously modify during the audio conference the particular type of attribute data that is selected for assigning the respective participants to the respective locations in the spatial image of an audio output.

For the purpose of illustration of the invention summarized hereinbefore, as well as the additional features, a detailed description of particular embodiments is provided with reference to drawings.

### BRIEF DESCRIPTION OF THE DRAWINGS

FIG. 1 is a conceptual diagram that illustrates a telecommunications infrastructure in which audio conferencing can take place.
FIG. 2 is a block diagram that illustrates an audio conferencing system in the telecommunications infrastructure.
FIG. 3 is a conceptual diagram that illustrates a database comprising attribute data for respective persons, who may participate in an audio conference.
FIG. 4 is a conceptual diagram that illustrates a spatial distribution of participants in a spatial image of an audio output for participants of an audio conference.

### DETAILED DESCRIPTION

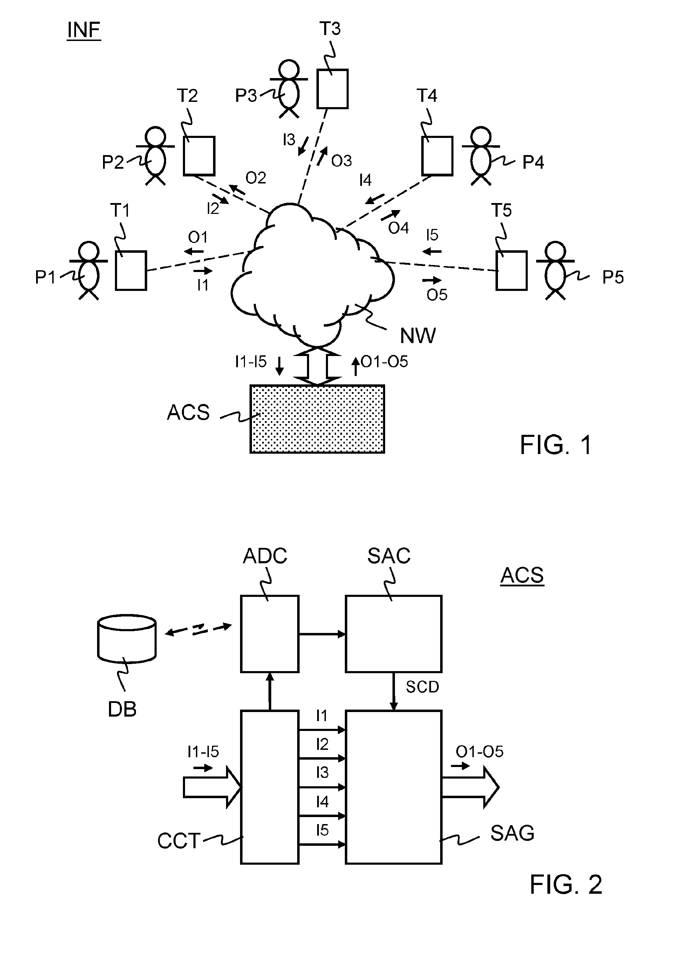

FIG. 1 conceptually illustrates a telecommunications infrastructure INF in which audio conferencing can take place. The telecommunications infrastructure INF comprises a telecommunication network NW through which various communication terminals may communicate with each other. An audio conferencing system ACS is coupled to the telecommunication network NW. The audio conferencing system ACS may be in the form of a server, or may form part of a server.
FIG. 1 illustrates, by way of example, five respective communication terminals T1-T5 that belong to five respective participants P1-P5 of an audio conference.

This does not exclude other configurations in which, for example, multiple participants jointly communicate through a single terminal that is present in a room where those multiple participants are also present. A communication terminal may be in the form of, for example, a fixed telephone device, a cellular telephone device, a personal digital assistant, or a personal computer that has an audio communication interface. The five respective communication terminals T1-T5 that participate in the audio conference need not necessarily be of the same type.

In the telecommunications infrastructure INF, the audio conference between the five participants P1-P5 may basically be carried out as follows. A participant who wishes to join the audio conference may dial a particular telephone number that is associated with the audio conferencing system ACS. A communication between the communication terminal of that participant and the audio conferencing system ACS is established. The participant may then specify a particular code identifying the audio conference he or she wishes to join. The audio conferencing system ACS recognizes this code and may place the participant in the audio conference.

In general, the audio conferencing system ACS receives through the telecommunication network NW respective audio inputs I1-I5 from respective participants of the audio conference. The audio conferencing system ACS generates audio outputs O1-O5 for the respective participants of the audio conference. An audio output for a particular participant is typically a combination of respective audio inputs from other participants of the audio conference. The audio conferencing system ACS transmits the audio outputs O1-O5 through the telecommunication network NW to the respective participants P1-P5 of the audio conference.

The audio outputs O1-O5 that the audio conferencing system ACS generates are spatial. For example, the audio outputs may be in stereo, which is a one-dimensional form of spatial audio. Since the audio outputs are spatial, the audio outputs have a spatial image. The spatial image is a range of locations within which a sound can be placed for creating a spatial effect. A sound placed at a particular location in the spatial image is perceived by a human being as originating from that particular location. For example, in the case of stereo, the spatial image is one-dimensional ranging from a left-most location to a right-most location. A sound can be placed at a location between the left-most location and the right-most location in this one-dimensional range, including the two aforementioned locations. In the foregoing, the term sound has been used synonymously with an audio input from a participant of the audio conference.
FIG. 2 schematically illustrates the audio conferencing system ACS in greater detail. The audio conferencing system ACS comprises various functional modules:
   a conference control module CCT, an attribute data collection module ADC, a spatial audio control module SAC, and a spatial audio generating module SAG. The aforementioned functional modules may each be implemented by means of, for example, a set of instructions that has been loaded into an instruction execution device. In such a software-based implementation, the set of instructions defines operations that the functional module concerned carries out, which will be described hereinafter. In this respect, FIG 2 can be regarded as representing a method, at least partially, whereby a functional module, or a combination of functional modules, can be regarded as representing a step of the method. For example, the attribute data collection module ADC can be regarded as representing an attribute data collection step, the spatial audio control module SAC can be regarded as representing a spatial audio control step, and so on.

FIG. 2 further illustrates that the audio conferencing system ACS has access to a database DB that comprises attribute data for individuals who may participate in an audio conference. The database DB may be in the form of, for example, an organizational directory wherein attribute data specifies, for example, a department to which a particular individual belongs. The audio conferencing system ACS may access the database DB through, for example, a communication network or through a dedicated data link. Thus, the database DB need not form part of the audio conferencing system ACS.

The audio conferencing system ACS illustrated in FIG. 2 basically operates as follows. The conference control module CCT identifies an audio input as belonging to a particular participant. The conference control module CCT may make this identification in various different manners. For example, the conference control module CCT may identify an audio input as belonging to a particular participant on the basis of a telephone number that is associated with the audio input. As another example, the conference control module CCT may identify an audio input as belonging to a particular participant on the basis of data extracted from the audio input of that participant. This extracted data may be, for example, a voice signature that characterizes the participant. In the latter example, the audio conferencing system ACS can distinguish between multiple participants who jointly use a telecommunication terminal.

The attribute data collection module ADC collects respective attribute data for the respective participants of the audio conference. An attribute data that is collected for a participant indicates a category to which the participant belongs. Respective participants who belong to a same category have similar attribute data. For example, the attribute data for a participant may relate to a department within an organization where the participant works. Participants who work within a same department will have similar attribute data and, as a result, will belong to a same category.

The attribute data collection module ADC may collect attribute data in various different manners. For example, the attribute data collection module ADC may query the database DB illustrated in FIG. 2 on the basis of an identifier of a participant so as to collect attribute data for that participant. The identifier may be in the form of, for example, a telephone number of the participant. As another example, the identifier may be in the form of a name of the participant. The audio conferencing system ACS may obtain the name of a participant by means of, for example, speech recognition applied to an audio input of the participant. As another example, the audio conferencing system ACS may obtain a name of a participant as input data from a communication terminal. The name may be specified by entering alphanumerical characters on a user interface of the communication terminal. This equally applies to any type of identifier.

It should be noted that there are various ways in which the attribute data collection module ADC can identify one or more databases from which attribute data may be collected. For example, the database DB illustrated in FIG. 2 may be designated by a participant who organizes the audio conference. This database designation may take place in a setup procedure, which precedes the audio conference, or during the audio conference itself. As another example, the attribute data collection module ADC may automatically and autonomously identify the database DB on the basis of, for example, one or more identifiers of one or more participants of the audio conference. For example, in the setup procedure, the conference control module CCT may provide the attribute data collection module ADC with a telephone number, or another type of identifier, of the participant who organizes the audio conference. The attribute data collection module ADC may comprise a link list, which links this identifier with one or more databases from which attribute data may be retrieved.

Another way in which the attribute data collection module ADC may collect attribute data is as follows. The attribute data collection module ADC may transmit a query to a terminal of a participant. The query invites the participant to specify attribute data, which, for example, may relate to a department within an organization. For example, the query may be in the form of a menu that is vocally presented: "if you work for a marketing department press 1, if you work for a manufacturing department press 2, if you work for a procurement department press 3", etc. In this example, a participant specifies his or her attribute data by pressing an appropriate key on the communication terminal. It should be noted that such a query may involve a set of menus, which are hierarchically structured.

The spatial audio control module SAC assigns respective sets of participants to respective locations in the spatial image of the audio outputs O1-O5 for the participants of the audio conference. That is, the spatial audio control module SAC defines a spatial distribution of participants. The spatial audio control module SAC defines this spatial distribution on the basis of the respective attribute data for the respective participants, which the attribute data collection module ADC has collected. The attribute data of a participant determines a particular spatial location where the participant is placed in the spatial image of the audio outputs. A set of participants having similar attribute data are therefore assigned to a same location in the spatial image. For example, participants who work for the marketing department are placed at the left-most location, participants who work for the manufacturing department are placed at a central location, and participants who work for the procurement department are placed at the right-most location.

The spatial audio generating module SAG generates the audio outputs O1-O5 for the participants of the audio conference from respective audio inputs I1-I5 of respective participants. To that end, the spatial audio generating module SAG applies the spatial distribution of participants that the spatial audio control module SAC has defined. Accordingly, the spatial audio generating module SAG places the respective audio inputs of the respective participants at the respective locations that have been assigned to the respective participants on the basis of the collected attribute data.

The spatial audio control module SAC may apply spatial audio control data SCD, which defines the spatial distribution of participants, to the spatial audio generating module SAG. For example, the spatial audio control data SCD may comprise respective sets of coefficients for respective audio inputs of respective participants. A set of coefficients determines where the participant is placed in the spatial image of an audio output. Participants who have similar attribute data have a similar set of coefficients. These participants belong to a same category and will thus effectively share a particular location in the spatial image of the audio output.

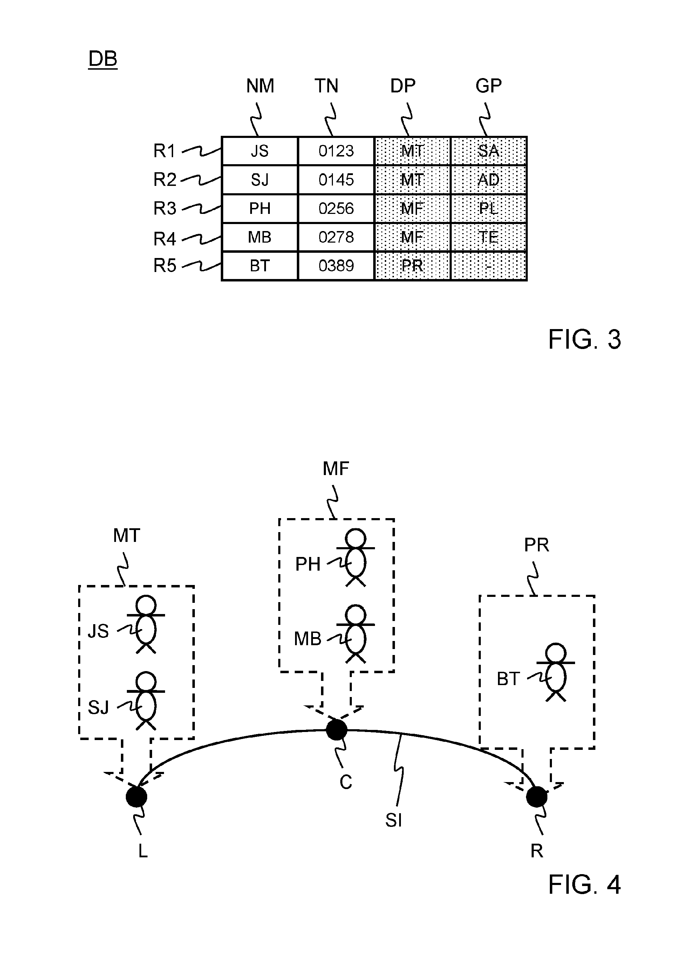

FIG. 3 conceptually illustrates an example of the database DB that the audio conferencing system ACS illustrated in FIG. 2 may access. In this example, the database DB is in the form of an organizational directory. The database DB can be regarded as a table that comprises respective rows R1-R5 for respective individuals within an organization. A row, which relates to a particular individual, may comprise various data elements that provide information on that particular individual.

In FIG. 3, data elements of a similar type are grouped in a column. Four types of data elements are represented in FIG. 3: "name", "number", "department", and "group" in the columns designated as NM, TN, DP, and GP, respectively. The data element of type "name" specifies a name of the individual concerned. The data element of the type "number" specifies a telephone extension number of the individual concerned. The data elements of the type "department" and "group" specify a department and a group within this department, respectively, to which the individual concerned belongs. The latter two data elements are thus hierarchically related.

In FIG. 3, five respective names of five respective individuals are represented: John Smith, Susanna Jones, Peter Hill, Mary Brown, and Bob Taylor, designated as JS, SJ, PH, MB, and BT, respectively. In this example, each of these five individuals has a different telephone extension number, which is represented as a four-digit number in FIG. 3. It is assumed that the organization comprises a marketing department, a manufacturing department, and a procurement department, which are designated as, respectively, MT, MF, and PR, respectively, in FIG. 3. It is further assumed that the marketing department comprises a sales group and an advertising group, designated as SA and AD, respectively, in FIG. 3. The manufacturing department comprises a planning group and a technical group designated as PL and TE, respectively, in FIG. 3. The database DB illustrated in FIG. 3 specifies for each of the five respective individuals, the telephone extension number of the individual concerned, the department to which the individual belongs, as well as the group within the department of which he or she forms part.

In the database DB that is illustrated in FIG. 3, the data elements of the type "department" and "group" constitute attribute data that indicates a category to which a particular individual belongs. Such an attribute data can be assigned to multiple individuals; it is not uniquely related to a particular individual. A group of individuals who belong to a same category will therefore have similar attribute data. For example, the database DB indicates that John Smith and Susanna Jones are of the marketing department, which implies that they have marketing expertise. The database DB indicates that Peter Hill and Mary Brown are of the manufacturing department, which implies that they have manufacturing expertise. In this example, individuals who work within a same department will have similar attribute data and, as a result, will belong to a same category.

FIG. 4 conceptually illustrates a spatial distribution of participants in the spatial image SI of the audio outputs O1-O5 that the audio conferencing system ACS illustrated in FIG. 2 may generate. In this example, it is assumed that the audio conference involves John Smith, Susanna Jones, Peter Hill, Mary Brown, and Bob Taylor, mentioned hereinbefore in relation with the database DB illustrated in FIG. 3. It is further assumed that the attribute data collection module ADC queries this database DB and that the spatial audio control module SAC uses the data elements of the type "department" as the attribute data for defining a spatial distribution of participants. This attribute data thus determines the respective particular spatial locations where the respective sets of participants are placed in the spatial image of an audio output.

The spatial distribution of participants illustrated in FIG. 4 is based on a particular spatial distribution scheme. According to this scheme, participants who belong to the marketing department are placed at the left-most location L in the spatial image of an audio output. In this example, these participants are John Smith and Susanna Jones. Participants who belong to the manufacturing department are placed at a center location C in the spatial image. This concerns Peter Hill and Mary Brown. Participants who belong to the procurement department are placed at the right-most location R. In this example, there is one such participant: Bob Taylor. The spatial audio control module SAC applies the spatial distribution scheme described hereinbefore to arrive at the spatial distribution of participants illustrated in FIG. 4.

The spatial audio control module SAC may adapt the spatial distribution scheme during the course of an audio conference. That is, respective different spatial distributions schemes may apply during respective different phases in the audio conference. Each different spatial distribution scheme represents a unique way in which respective sets of participants are assigned to respective locations in the spatial image of the audio outputs. Each different phase in the audio conference may be characterized by a unique set of participants who are in the audio conference during the phase concerned.

For example, let it be assumed that in an initial phase only individuals who work for the marketing department participate in the audio conference. In that case, the spatial audio control module SAC may apply a spatial distribution scheme that is based on the data elements of the type "group" as attribute data. This attribute data allows a distinction between different categories of participants, whereas the data elements of type "department" do not allow such a distinction in the initial phase. For example, the spatial distribution scheme that applies in the initial phase may be as follows. Participants who form part of the sales group are placed at the left-most location in the spatial image, and participants who form part of the advertising group are placed at the right-most location. Accordingly, in the initial phase the spatial audio control module SAC may define a spatial distribution of participants in which John Smith is placed at the left-most location in the spatial image, whereas Susanna Jones is placed at the right-most location.

At an instant when a participant who does not belong to the marketing department joins the audio conference, the spatial audio control module SAC may apply a new, different spatial distribution scheme. This new spatial distribution scheme may be based on the data elements of the type "department". The new spatial distribution scheme may correspond with, for example, the one illustrated in FIG. 4.

As a further example, let it be assumed that, in a main phase of the audio conference, individuals participate who are not part of the organization to which the database DB illustrated in FIG. 3 applies. These individuals may belong, for example, to another organization, which may have a particular relationship with the first mentioned organization. Let it further be assumed that the attribute data collection module ADC is not capable of collecting attribute data for these new participants who belong to the other organization. The attribute data collection module ADC may then classify these participants in a special category "no attribute data available".

In the main phase of the audio conference, the spatial audio control module SAC may apply a spatial distribution scheme based on whether attribute data is available for a participant, or not. In case attribute data is available for a participant, the participant belongs to the organization to which the database DB illustrated in FIG. 3 applies. This organization will be referred to as organization A hereinafter. In case no attribute data is available, the participant concerned belongs to the other organization, which will be referred to as organization B hereinafter. Accordingly, the spatial distribution scheme for the main phase may be as follows. Participants who belong to organization A are placed at the leftmost location in the spatial image of an audio output, and participants who belong to organization B are placed at the rightmost location.

The spatial audio control module SAC may autonomously and automatically select a spatial distribution scheme to be applied in a particular phase of the audio conference. The spatial audio control module SAC may make this selection on the basis of attribute data that is available for participants who are in the audio conference in the phase concerned. For example, a selection criterion may relate to a number of clusters of participants that is obtained by applying a spatial distribution scheme, each cluster having a particular location in the spatial image. The selection criterion may be that the number of clusters should be comprised in a particular range between, for example, 2 and 4, with a preference for 3 clusters. This selection criterion is based on a consideration that there should be at least two different locations in the spatial image where participants are placed, but that there should not be too many different locations. In case there are too many different locations, participants may have difficulty in distinguishing sounds coming from different locations, which could cause confusion about who is speaking at a given instant.

The spatial audio control module SAC may interactively select a spatial distribution scheme to be applied. In that case, the spatial audio control module SAC interacts with a terminal of a participant so as to define respective locations of respective sets of participants in the spatial image of an audio output. This terminal may be, for example, the terminal of the participant who has organized the audio conference, or who is leading the audio conference, whichever applies. This terminal will be referred to as organizer's terminal hereinafter, wherever appropriate; the participant concerned will be referred to as organizer.

For example, the spatial audio control module SAC may send a message to the organizer's terminal in case a participant joins the audio conference and this joining participant has attribute data that is not specified in a currently applied spatial distribution scheme. The message signals that the joining participant cannot be assigned to a particular location in the spatial image. The organizer may then assign a particular location to the joining participant on his or her terminal, as a complement to the currently applied spatial distribution scheme. In effect, the organizer creates a new set with the joining participant as a single member, at least initially. Alternatively, the organizer may interactively select a different spatial distribution scheme that accommodates for the joining participant. For example, the spatial audio control module SAC may propose one or more appropriate spatial distribution schemes, which, for example, may be displayed on the organizer's terminal. The organizer may select one of these schemes, which the spatial audio control module SAC will apply.

A spatial distribution scheme may be predefined, or may be established during an audio conference in an interactive manner. For example, the spatial audio control module SAC may comprise a library of predefined spatial distribution schemes, or may have access to such a library. In a setup procedure, an organizer of an audio conference may select from the library a set of predefined spatial distribution schemes, which can be applied during the audio conference. The spatial audio control module SAC may assist the organizer in making such a selection. Alternatively, the spatial audio control module SAC may automatically select a set of predefined spatial distribution schemes on the basis of data relating to the audio conference. If no particular set is a selected, the spatial audio control module SAC may select an appropriate spatial distribution scheme from the library as a whole during the audio conference. The organizer may also define a new spatial distribution scheme for the audio conference, which can be added to the library. The organizer may further adjust an existing spatial distribution scheme.

A spatial distribution scheme may be defined in an interactive manner during an audio conference. For example, let it be assumed that a vote takes place among participants of the audio conference, the vote being a choice between "yes" and "no". A participant votes "yes" or "no" by, for example, pressing a particular button on his or her terminal. As another example, a participant may vote by pronouncing "yes" or "no" in case the audio conferencing system ACS is provided with a speech recognition module. The attribute data collection module ADC collects respective votes of respective participants as attribute data. The organizer may then define a spatial distribution scheme in which, for example, participants who have voted "yes" are placed at the left-most location in the spatial image of an audio output, participants who have voted "no" are placed at the right-most location in the spatial image, and participants who have not voted are placed at a center location. The organizer may add this interactively defined spatial distribution scheme to the library mentioned hereinbefore.

### FINAL REMARKS

The detailed description hereinbefore with reference to the drawings is merely an illustration of the invention and the additional features, which are defined in the claims. The invention can be implemented in numerous different ways. In order to illustrate this, some alternatives are briefly indicated.

The invention may be applied to advantage in numerous types of products or methods related to audio conferencing. For example, audio conferencing need not necessarily involve a telecommunication network as illustrated in FIG. 1. Audio conferencing may take place through dedicated transmission lines.

There are numerous types of attribute data that allow a classification into different categories of participants, and there are numerous ways of collecting such data. For example, attribute data may be collected from a public telephone directory on the basis of telephone numbers of participants. An attribute data collection module can identify that a particular participant belongs to a particular organization by querying the public telephone directory on the basis of the participant's telephone number. As another example, attribute data may be collected from one or more directories on the Internet on the basis of URL's (URL is an acronym for uniform resource locator) or other types of data that allow identifying such directories. In this respect, it should be noted that an attribute data collection module may be arranged to access various different databases through various different channels.

There are numerous different ways of implementing an audio conferencing in accordance with the invention. For example, modules and functions described with reference to FIG. 2 need not be concentrated in a single server. One or more modules, or one or more functions, may be distributed throughout a telecommunications infrastructure. For example, a module, or a function, may reside within a communication terminal. An audio conferencing in accordance with the invention may thus be based on a client-server architecture.

There are numerous different ways of setting up and conducting an audio conference in accordance with the invention. For example, a participant may join an audio conference by receiving a call from an audio conferencing system, rather than calling the audio conferencing system. Regarding identification of a participant, such an identification may be based on a code that the participant specifies. An audio conference may involve one or more sounds, which do not originate from participants. For example, an audio output of an audio conference may comprise background music, vocal guidance, or sound effects, which may signal a specific event, or any combination of these. Referring to FIG. 1, the spatial audio generating module SAG may receive such sounds as inputs and, moreover, place such a sound at a particular location in the spatial image.

There are numerous different types of audio that have a spatial image. Stereophonic audio is a basic example. Audio can also have a three-dimensional spatial image, which may comprise elevation as a spatial sound placement parameter. A three-dimensional spatial image may comprise various different planes that have respective orientations with respect to a cranial sphere.

The term "audio conferencing" should be understood in a broad sense. The term may embrace any type of communication in which an audio output is generated on the basis of respective audio inputs from respective sources. The term "set of participants" should be understood in a broad sense. A set of participants may comprise a single participant only. That is, a set need not necessarily comprise a plurality of participants.

In general, there are numerous different ways of implementing the invention, whereby different implementations may have different topologies. In any given topology, a single module may carry out several functions, or several modules may jointly carry out a single function. In this respect, the drawings are very diagrammatic. For example, referring to FIG. 2, the conference control module CCT and the attribute data collection module ADC may form part of a single processing module. The same applies to other functional entities and modules that have been described.

There are numerous functions that may be implemented by means of hardware or software, or a combination of both. A description of a software-based implementation does not exclude a hardware-based implementation, and vice versa. Hybrid implementations, which comprise one or more dedicated circuits as well as one or more suitably programmed processors, are also possible. For example, various functions described hereinbefore with reference to the figures may be implemented by means of one or more dedicated circuits, whereby a particular circuit topology defines a particular function.

There are numerous ways of storing and distributing a set of instructions, that is, software, which allows processing for audio conferencing in accordance with the invention. For example, software may be stored in a suitable device readable medium, such as, for example, a magnetic disk, an optical disk, or a memory circuit. A device readable medium in which software is stored may be supplied as an individual product or together with another product, which may execute the software. Such a medium may also be part of a product that enables software to be executed. Software may also be distributed via communication networks, which may be wired, wireless, or hybrid. For example, software may be distributed via the Internet. Software may be made available for download by means of a server. Downloading may be subject to a payment.

The remarks made hereinbefore demonstrate that the detailed description with reference to the drawings is an illustration of the invention rather than a limitation. The invention can be implemented in numerous alternative ways that are within the scope of the appended claims. All changes that come within the meaning and range of equivalency of the claims are to be embraced within their scope. Any reference sign in a claim should not be construed as limiting the claim. The word "comprising" does not exclude the presence of other elements or steps than those listed in a claim. The word "a" or "an" preceding an element or step S does not exclude the presence of a plurality of such elements or steps. The mere fact that respective dependent claims define respective additional features, does not exclude combinations of additional features other than those reflected in the claims.

## Claims

1. An audio conferencing system (ACS) comprising:
- an attribute data collection module (ADC) arranged to collect respective attribute data (DP, GP) for respective participants of an audio conference, an attribute data for a participant indicating a category to which the participant belongs, whereby respective participants who belong to a same category have similar attribute data; and
- a spatial audio control module (SAC) arranged to assign respective sets of participants having similar attribute data to respective locations in a spatial image of an audio output for a participant of the audio conference, whereby a set of participants having similar attribute data are assigned to a same location in the spatial image;
- a spatial audio generating module (SAG) arranged to generate audio outputs for the participants of the audio conference by placing respective audio inputs of respective sets of participants at respective locations that have been assigned by the spatial audio control module.

2. An audio conferencing system according to claim 1, wherein the attribute data collection module (ADC) is arranged to collect attribute data (DP, GP) from a database (DB) comprising data relating to respective participants.

3. An audio conferencing system according to claim 2, wherein the attribute data collection module (ADC) is arranged to query the database (DB) on the basis of an identifier (TN, NM) of a participant.

4. An audio conferencing system according to claim 3, wherein the attribute data collection module (ADC) is to query the database (DB) on the basis of a telephone number (TN) of a participant.

5. An audio conferencing system according to claim 3, wherein the attribute data collection module (ADC) is to query the database (DB) on the basis of a name (NM) of a participant.

6. An audio conferencing system according to claim 1, wherein the attribute data collection module (ADC) is arranged to transmit a query to a terminal (T1-T5) of a participant, the query inviting the participant (P1-P5) to specify attribute data.

7. An audio conferencing system according to claim 1, wherein the spatial audio control module (SAC) is arranged to interact with a terminal (T1-T5) of a participant so as to define respective locations (L, C, R) of respective participants (P1-P5) in the spatial image (SI) of an audio output.

8. An audio conferencing system according to claim 1, wherein the spatial audio control module (SAC) is arranged to modify respective locations of respective participants in the spatial image of an audio output during the audio conference in at least one of the following two cases:
- a first case in which a participant joins the audio conference, whereby there is no attribute data for this participant that corresponds with the attribute data of any participant who has already joined the audio conference, and
- a second case in which a participant leaves the audio conference, whereby there is no attribute data for this participant that corresponds with the attribute data of any participant who remains in the audio conference.

9. An audio conferencing system according to claim 1, comprising a conference control module (CCT) arranged to identify an audio input (I1-I5) as belonging to a particular participant (P1-P5) on the basis of at least one of the following data: a data extracted from the audio input, a data provided by the participant in association with the audio input, and an identifier associated with the audio input.

10. An audio conferencing system according to claim 1, wherein:
- the attribute data collection module (ADC) is arranged to collect respective sets of attribute data (DP, GP) for respective participants; and
- the spatial audio control module (SAC) is arranged to select a particular type of attribute data from the respective sets for assigning the respective participants to the respective locations (L, C, R) in the spatial image (SI) of an audio output (O1-O5).

11. An audio conferencing system according to claim 10, wherein the spatial audio control module (SAC) is arranged to modify during the audio conference the particular type of attribute data that is selected for assigning the respective participants to the respective locations (L, C, R) in the spatial image (SI) of an audio output.

12. A method of processing for audio conferencing, the method comprising:
- an attribute data collection step (ADC) in which respective attribute data (DP, GP) for respective participants (P1-P5) of an audio conference are collected, an attribute data for a participant indicating a category to which the participant belongs, whereby respective participants who belong to a same category have similar attribute data;
- a spatial audio control step (SAC) in which respective sets of participants having similar attribute data are assigned to respective locations (L, C, R) in a spatial image (SI) of an audio output (O1-O5) for a participant of the audio conference, whereby a set of participants having similar attribute data are assigned to a same location in the spatial image; and
- a spatial audio generating step (SAG) in which audio outputs for the participants of the audio conference are generated by placing respective audio inputs of respective sets of participants at respective locations that have been assigned in the spatial audio control step.

13. A device readable medium comprising a set of instructions that enables a device, which is capable of executing the set of instructions, to carry out the method according to claim 12.
